# EUROPEAN PATENT APPLICATION

(11) **EP 1 523 115 A2**
(43) Date of publication of application: **13.04.2005**
(21) Application number: 04001778.2
(22) Date of filing: 28.01.2004
(51) Int. Cl.: H04H 1/00

(54) **Apparatus and method for transmitting an audio signal in a mobile communication terminal serving as a digital multimedia broadcast receiver**

(30) Priority: 07.10.2003 KR 2003069739
(71) Applicant: Samsung Electronics Co., Ltd., Suwon-si, Gyeonggi-do (KR)
(72) Inventor: Lee, Sang-Hyuk, Suwon-si Gyeonggi-do (KR); Lee, Kyung-Ha, Suwon-si Gyeonggi-do (KR)
(74) Representative: Lang, Johannes, Dipl.-Ing.

(57) **Abstract**

An apparatus and method for transmitting audio signals in a mobile terminal receiving digital multimedia broadcast signals. The apparatus includes a broadcast reception process part for receiving a digital multimedia broadcast signal having at least an audio signal, separating the audio signal from the received digital multimedia broadcast signal, and outputting the separated audio signal; a Digital-to-Analog Converter for converting the separated audio signal into an analog audio signal; a controller for determining whether a predetermined request for transmitting the audio signal contained in the digital multimedia broadcast signal is entered during a voice call time; a synthesizer for receiving a control signal from the controller, and synthesizing the analog audio signal received from the DAC and a user's voice signal to create a synthesized signal; and a communication part for wirelessly transmitting the synthesized signal.

## Description

### BACKGROUND OF THE INVENTION

### 1. Field of the Invention

The present invention relates to a mobile communication terminal, and more particularly to an apparatus and method for transmitting audio signals in a mobile communication terminal serving as a digital multimedia broadcast receiver.

### 2. Description of the Related Art

Typically, a Digital Multimedia Broadcasting television (DMB TV) set and a Digital television (DTV) set are each currently adapted as a wireless communication terminal for enabling their users to view and listen to high-quality digital video and audio broadcast signals while the user is in motion.

A representative example of a broadcast service system using a mobile communication terminal (i.e., a mobile terminal) has been disclosed in published Korean Patent Publication No. 2001-10109, which is hereby incorporated by reference. Referring to the broadcast service system shown in the published Korean Patent Publication No. 2001-10109, if a TV broadcasting station converts broadcast data into another broadcast data form according to a prescribed format and a transfer rate suitable for the mobile communication network characteristics and then transmits the converted broadcast data, a user or subscriber of the mobile communication network can view or listen to the transmission broadcast data using his or her mobile terminal. However, because the broadcast service system has only a simple function to enable the user to view or listen to his or her desired broadcast program on a display screen of his or her mobile terminal, it merely adapts a mobile terminal as a TV broadcast program viewer. The mobile terminal's unique function of establishing a call connection state with another party is not considered when providing broadcast viewing capability on the mobile terminal.

A representative example of a mobile phone terminal and a communication method using the same has been disclosed in published Japanese Patent Publication No. 2001-60993, which is hereby incorporated by reference. Referring to this exemplary mobile phone terminal of the published Japanese Patent Publication No. 2001-60993, a user or subscriber of the mobile terminal can transmit not only his or her voice signal but also a background music signal to a called party. In this case, this background music signal is generally reproduced using data stored in a built-in memory of the mobile terminal. Therefore, the aforementioned published Japanese Patent Publication No. 2001-60993 has a disadvantage in that it must increase memory space to transmit a variety of background music signals according to the called party's interest or condition, and even worse, there is a limitation to the number of varieties even though the mobile terminal has enough memory space to store data.

### SUMMARY OF THE INVENTION

Therefore, the present invention has been made in view of the above problems, and it is an object of the present invention to provide an apparatus and method for transmitting a broadcast audio signal in a mobile terminal receiving digital multimedia broadcast signals to a called party.

In accordance with one aspect of the present invention, the above and other objects can be substantially accomplished by the provision of an apparatus for transmitting an audio signal in a mobile communication terminal serving as a digital multimedia broadcast receiver, comprising a broadcast reception process part of the mobile terminal for receiving a digital multimedia broadcast signal having at least an audio signal, separating the audio signal from the received digital multimedia broadcast signal, and outputting the separated audio signal; a Digital-to-Analog Converter (DAC) for converting the separated audio signal into an analog audio signal; a controller for determining whether a predetermined request for transmitting the audio signal contained in the digital multimedia broadcast signal is entered during a voice call time; a first synthesizer for receiving a control signal from the controller, and synthesizing the analog audio signal received from the DAC and a user's voice signal to create a primary synthesized signal; and a communication part of the mobile terminal for wirelessly transmitting the primary synthesized signal.

In accordance with another aspect of the present invention, there is provided an apparatus for transmitting an audio signal in a mobile communication terminal serving as a digital multimedia broadcast receiver, comprising a broadcast reception process part of the mobile terminal for receiving a digital multimedia broadcast signal having at least an audio signal, separating the audio signal from the received digital multimedia broadcast signal, and outputting the separated audio signal; a rate matching unit for controlling a ratio of a user's voice signal to the separated audio signal; a first synthesizer for synthesizing the audio signal generated from the rate matching unit and the user's voice signal to create a synthesized signal; and a communication part of the mobile terminal for wirelessly transmitting the synthesized signal.

In accordance with yet another aspect of the present invention, there is provided an apparatus for transmitting an audio signal in a mobile communication terminal serving as a digital multimedia broadcast receiver, comprising a broadcast reception process part of the mobile terminal for receiving a digital multimedia broadcast signal having at least an audio signal, separating the audio signal from the received digital multimedia broadcast signal, and outputting the separated audio signal; a rate matching unit for performing a rate control operation to transmit the separated audio signal over a dedicated data transmission channel; and a communication part of the mobile terminal for controlling the rate matching unit to vary its own control rate according to wireless environments, and transmitting the audio signal over the dedicated data transmission channel.

Therefore, the above-identified embodiments of the present invention allows the user's voice signal to be muted, and transmits only the audio signal, enabling the user to transmit his or her desired audio signal to the called party when he or she wishes to temporarily hold a call connection state due to his or her personal situation.

In accordance with yet another aspect of the present invention, there is provided a method for transmitting an audio signal in a mobile communication terminal serving as a digital multimedia broadcast receiver, comprising the steps of a) determining whether a broadcast signal is received while performing a voice call function; b) determining whether the received broadcast signal contains an audio signal; and c) if the received broadcast signal contains the audio signal, detecting the audio signal, and transmitting it over an audio channel.

In accordance with yet another aspect of the present invention, there is provided a method for transmitting an audio signal in a mobile communication terminal serving as a digital multimedia broadcast receiver, comprising the steps of a) determining whether a broadcast signal is received while performing a voice call function; b) determining whether the received broadcast signal contains an audio signal; and c) if the received broadcast signal contains the audio signal, detecting the audio signal, and transmitting it over a dedicated data channel.

### BRIEF DESCRIPTION OF THE DRAWINGS

The above and other objects, features and other advantages of the present invention will be more clearly understood from the following detailed description taken in conjunction with the accompanying drawings, in which:
- Fig. 1: is a block diagram illustrating an apparatus for processing a broadcast audio signal using an analog scheme in a mobile terminal serving as a digital multimedia broadcast receiver, and transmitting the processed result to a called party in accordance with an embodiment of the present invention;
- Fig. 2: is a block diagram illustrating an apparatus for processing a broadcast audio signal using a digital scheme in a mobile terminal serving as a digital multimedia broadcast receiver, and transmitting the processed result to a called party in accordance with an embodiment of the present invention;
- Fig. 3: is a block diagram illustrating another apparatus for processing a broadcast audio signal using a digital scheme in a mobile terminal serving as a digital multimedia broadcast receiver, and transmitting the processed result to a called party in accordance with an embodiment of the present invention;
- Fig. 4: is a flow chart illustrating a method for transmitting a broadcast audio signal in a mobile terminal serving as a digital multimedia broadcast receiver in accordance with an embodiment of the present invention;
- Fig. 5: is a flow chart illustrating detailed operations of an audio processing routine shown in Fig. 4 in accordance with an embodiment of the present invention;
- Fig. 6: is a flow chart illustrating another detailed operation of the audio processing routine shown in Fig. 4 in accordance with an embodiment of the present invention; and

- Fig. 7: is a flow chart illustrating yet another detailed operation of the audio processing routine shown in Fig. 4 in accordance with an embodiment of the present invention.

### DETAILED DESCRIPTION OF THE PREFERRED EMBODIMENTS

Several embodiments of the present invention will be described in detail with reference to the accompanying drawings. In the drawings, the same or similar elements are denoted by the same reference numerals. In the following description, a detailed description of known functions and configurations incorporated herein will be omitted for conciseness unclear.

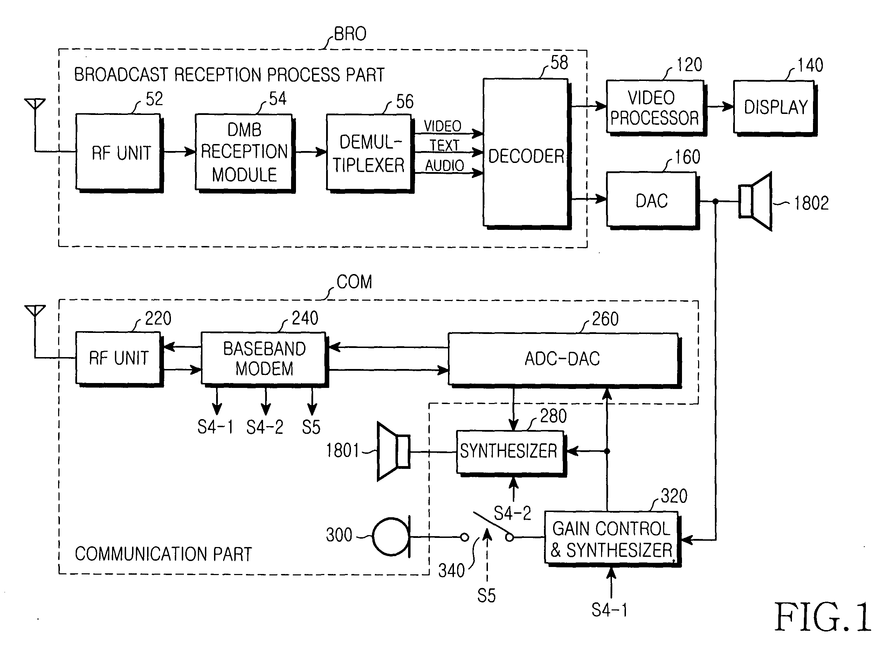

Fig. 1 is a block diagram illustrating an apparatus for processing a broadcast audio signal using an analog scheme in a mobile terminal serving as a digital multimedia broadcast receiver, and transmitting the processed result to a called party in accordance with an embodiment of the present invention.

A digital multimedia broadcast (DMB) signal includes at least one signal of video, audio, and text signals. A broadcast reception process part (BRO) receives a digital multimedia broadcast signal, divides the received digital multimedia broadcast signal into video, text, and audio signals, decodes the divided signals, and outputs the decoded signals. The BRO includes an Radio Frequency (RF) unit 52, a DMB reception module 54, a demultiplexer 56, and a decoder 58. The RF unit 52 receives the digital multimedia broadcast signal via an antenna, converts the received digital multimedia broadcast signal into a baseband signal. The DMB reception module 54 detects a user-selected channel signal upon receiving the baseband signal from the RF unit 52. The demultiplexer 56 demultiplexes a broadcast signal generated from the DMB reception module 54 into video, text, and audio signals. The decoder 58 decodes the demultiplexed video, text, and audio signals, and outputs the decoded result. Although the broadcast signal transferred from a multimedia broadcasting station includes video, audio, and text data, etc., the embodiment of the present invention is characterized by a method for processing/transmitting the audio data, such that other methods for processing/transmitting the video and text data will herein be omitted for convenience. However, it should be appreciated that the embodiment of the present invention is not limited to processing/transmitting audio.

A communication part (COM) wirelessly transmits voice and broadcast audio signals or their synthesized signal, etc., to a called party, or wirelessly receives a signal from the called party. The COM includes an analog-to-digital converter and digital-to-analog converter (ADC-DAC) 260, a baseband modem 240, an RF unit 220, a microphone 300, and a speaker 1801. The ADC-DAC 260 converts a signal to be wirelessly transmitted or a reception signal into an analog signal or a digital signal. The baseband modem 240 receives the signal to be wirelessly transmitted from the ADC-DAC 260, and transmits the signal to the RF unit 220. Otherwise, the baseband modem 240 receives a wireless transmission signal from the RF unit 220, and transmits the received signal to the ADC-DAC 260.

A digital-to-analog converter (DAC) 160 converts the decoded digital multimedia broadcast audio signal into an analog signal. This analog signal generated from the DAC 160 is transmitted to a speaker 1802. The speaker 1802 audibly outputs the received analog signal, such that a user can listen to the broadcast audio signal.

A gain control and synthesizer 320 controls a gain of the analog broadcast audio signal received from the DAC 160 as well as a gain of a user's voice signal received from the microphone 300, and synthesizes these gain-controlled audio and voice signals. Although the aforementioned example integrates a gain controller and a synthesizer as one unit using a few components such as resistors, etc., it should be noted that the gain controller and the synthesizer can also be separate from each other if needed. The gain controller controls individual input or amplification rates of the broadcast audio signal and the voice signal.

The synthesizer 280 synthesizes the called party's voice signal received from the ADC-DAC 260 and the output signal (i.e., the synthesized signal of the user's voice signal and the broadcast audio signal) of the gain control and synthesizer 320, and outputs the synthesized signal of the called party's voice signal and the 320's output signal. The synthesized signal generated from the synthesizer 280 is audibly emitted from the speaker 1801, such that the user can directly monitor/determine whether his or her voice signal received via the microphone 300 and the broadcast audio signal each have an appropriate signal magnitude, and can control individual magnitudes of the voice and broadcast audio signals.

A signal transfer controller 340 connected between the gain control and synthesizer 320 and the microphone 300 transmits or does not transmit the user's voice signal received from the microphone 300 to the gain control and synthesizer 320 in response to a control signal S5 generated from the baseband modem 240. The control signal S5 generated from the baseband modem 240 is adapted to mute the user's voice signal when the user selects a voice mute function. The called party's voice signal and the audio signal other than the user's voice signal are synthesized using the control signal S5, such that the user can directly monitor/determine whether the synthesized signal of the called party's voice signal and the audio signal has an appropriate magnitude, and can control the magnitude of the synthesized signal.

If the user selects the voice mute function, the baseband modem 240 generates a control signal S4-1 for the first status (i.e., ON status), and controls the gain control and synthesizer 320 not to process the voice signal. A representative example of the baseband modem 240 is a Mobile Station Modem (MSM) chip manufactured by Qualcomm Corporation.

A display 140 indicates a transmission enable status of the broadcast audio signal. For this purpose, when detecting a specific status that the digital multimedia broadcast signal received in the BRO contains an audio signal, the baseband modem 240 or the decoder 58 controls the display 140 to indicate this specific status thereon. The display 140 displays a variety of operation conditions of the mobile terminal thereon.

A video processor 120 performs a predetermined signal processing on the video signal detected from the digital multimedia broadcast signal received in the BRO and decoded such that the video signal can be displayed on the display 140.

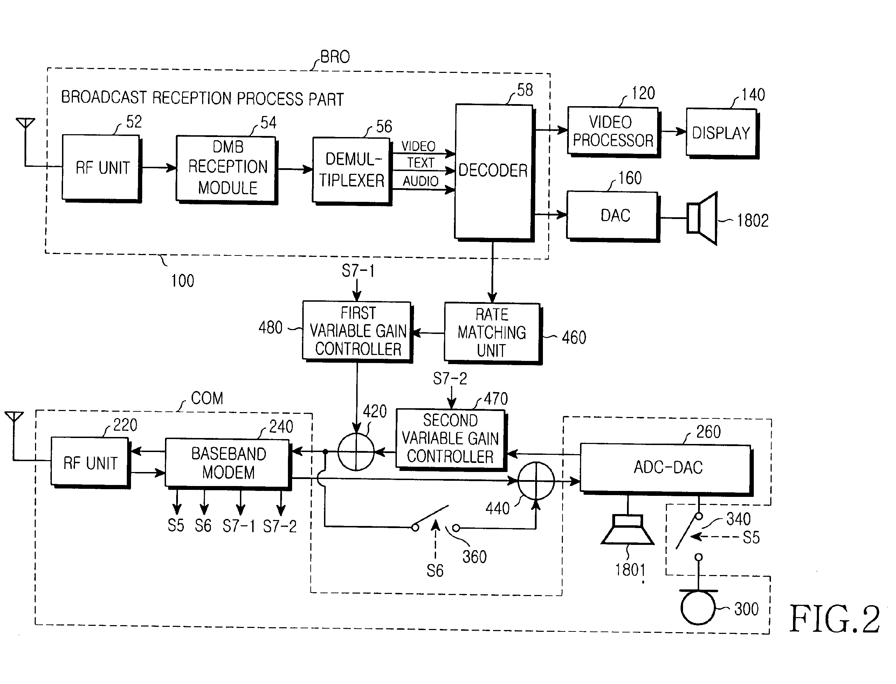

Fig. 2 is a block diagram illustrating an apparatus for processing a broadcast audio signal using a digital scheme in a mobile terminal serving as a digital multimedia broadcast receiver, and transmitting the processed result to a called party in accordance with an embodiment of the present invention.

The BRO, the COM, and the DAC 160 of Fig. 2 are the same as those of Fig. 1, and the video processor 120 and the display 140 of Fig. 2 are also the same as those of Fig. 1, such that their detailed descriptions will herein be omitted for the convenience of description.

Referring to Fig. 2, an audio signal generated from the decoder 58 of the BRO is transmitted to a rate matching unit 460. The rate matching unit 460 controls the rate of the decoded broadcast audio signal to be equal to the rate of voice signal. The broadcast audio signal decoded by the decoder 58 has a superior sampling rate higher than that of the voice signal, such that the broadcast audio signal cannot be synthesized or combined with the voice signal without signal processing being performed. Therefore, there is a need for the decoded broadcast audio signal to have the same sampling rate as the voice signal. The rate matching unit 460 may remove a high frequency component from the audio signal, or may smooth the high frequency contained in the audio signal, such that it can fabricate the audio signal in the form of a prescribed data format suitable for current commercial voice signal transmission. This audio signal fabrication function of the rate matching unit 460 is more effective when a vocoder of the baseband modem for the mobile terminal is designed to process only specific signals suitable for a frequency band of such a voice signal. Current commercial vocoders are designed to automatically remove a specific frequency component higher than a predetermined frequency from their own reception signals. Therefore, the rate matching unit 460 properly processes the specific frequency component to be matched with the vocoder, such that a user can easily listen to a high-quality audio signal.

A first variable gain controller 480 controls a gain of the rate-matched broadcast audio signal received from the rate matching unit 460. A second variable gain controller 470 controls a gain of the voice signal converted into digital voice signal by the COM. A first synthesizer 420 synthesizes the broadcast audio signal received from the rate matching unit 460 via the first variable gain controller 480 and the user's voice signal generated from the second variable gain controller 470, and transmits the synthesized result to the COM.

A first signal transmission controller 340 transmits or does not transmit the user's voice signal received from the microphone 300 to the COM in response to a control signal S5 generated from the baseband modem 240 contained in the COM. The baseband modem 240 generates the control signal S5 when the user selects a voice mute function, such that the first signal transmission controller 340 does not transmit the voice signal to the COM due to the control signal S5. Besides the above voice mute function performed by the first signal transmission controller 340, a method for controlling the ADAC-DAC 260 to not process a muted voice signal upon receiving a control signal from the baseband modem 240, or another method for controlling the second variable gain controller 470 to set its own gain to a predetermined value "0" may also be used to prevent such a voice signal from being generated.

A second synthesizer 440 synthesizes an output signal of a first synthesizer 420 and a wirelessly-received called party's voice signal, and transmits the synthesized result signal to the speaker 1801 via the ADC-DAC 260. Therefore, the user listens to the synthesized signal generated in the form of audible sound, determines whether the synthesized signal has an appropriate magnitude, and thereby properly controls a gain of the synthesized signal according to the determination result. The output signal of the first synthesizer 420 may be a prescribed signal having no user's voice signal due to the control signal S5 applied to the first signal transmission controller 340.

A second signal transmission controller 360 transmits or does not transmit the output signal of the first synthesizer 420 to the second synthesizer 440 in response to a control signal S6 generated from the baseband modem 240.

The baseband modem 240 generates the control signal S6 when the user selects a monitoring function, such that the second signal transmission controller 360 transmits the output signal of the first synthesizer 420 to the second synthesizer 440 due to the control signal S6.

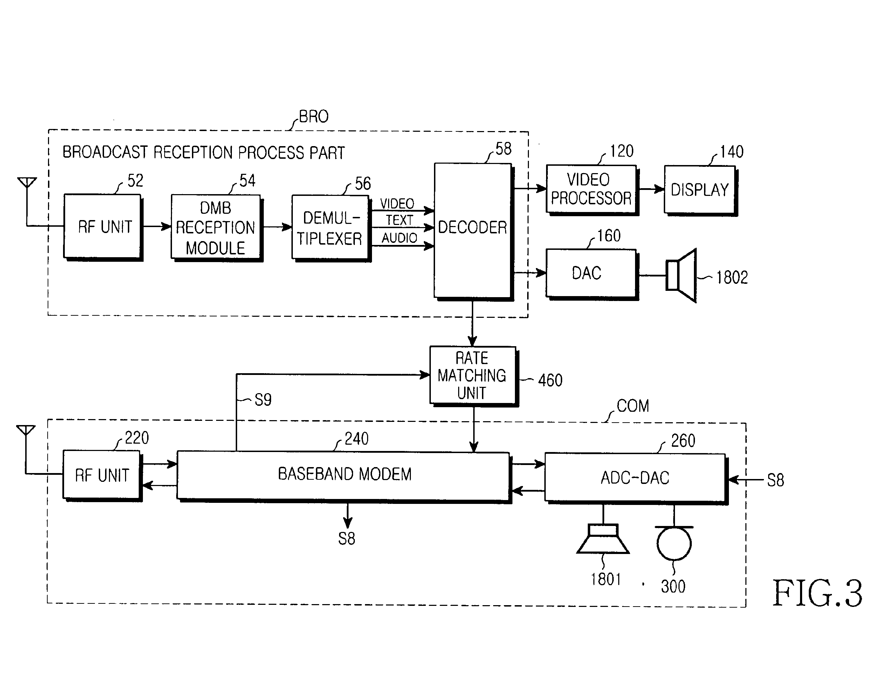

Fig. 3 is a block diagram illustrating another apparatus for processing a broadcast audio signal using a digital scheme in a mobile terminal serving as a digital multimedia broadcast receiver, and transmitting the processed result to a called party in accordance with an embodiment of the present invention.

The BRO, the COM, and the DAC 160 of Fig. 3 are the same as those of Fig. 1, and the video processor 120 and the display 140 of Fig. 3 are also the same as those of Fig. 1, such that a detailed description of those components will be omitted for the purpose of conciseness. Although there is no configuration for enabling a user to select a voice mute function in Fig. 3, it should be noted that such a configuration may also be implemented in the same manner as in Figs. 1 and 2.

Referring to Fig. 3, an audio signal generated from the decoder 58 of the BRO is transmitted to the rate matching unit 460. The rate matching unit 460 variably controls the rate of output audio signal of the decoder 58 according to a transfer rate of a dedicated data transmission channel. For example, in the case of a Code Division Multiple Access (CDMA)-1X, a dedicated data channel is called a Supplemental Channel (SCH), and a general voice transmission channel is called a Fundamental Channel (FCH).

The baseband modem 240 transmits a signal to be wirelessly transmitted to the RF unit 220, or receives a radio signal (i.e., an RF signal) from the RF unit 220. The baseband modem 240 outputs a control signal S9 to vary a control rate of the rate matching unit 460 according to a transfer rate of a dedicated data transmission channel. The COM transmits an audio signal and a voice signal to the dedicated data transmission channel and the general voice transmission channel, respectively.

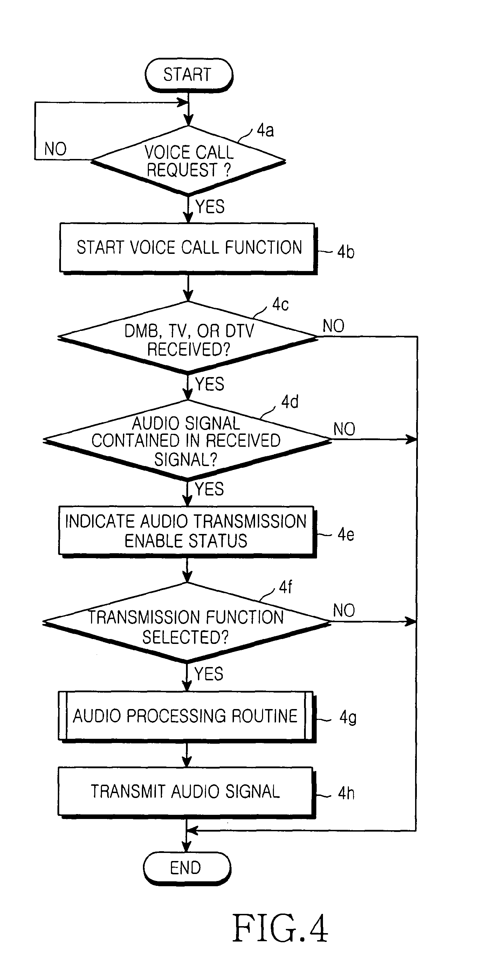

Fig. 4 is a flow chart illustrating a method for transmitting a broadcast audio signal in a mobile terminal serving as a digital multimedia broadcast receiver in accordance with an embodiment of the present invention.

Referring to Fig. 4, the baseband modem 240 determines whether a user enters a voice call request signal at step 4a. Upon receiving the voice call request signal from the user, the baseband modem 240 begins the voice call function at step 4b, and determines whether a broadcast signal is received while performing the voice call function at step 4c. If it is determined that the broadcast signal is received while performing the voice call function at step 4c, the baseband modem 240 determines whether an audio signal is contained in the received broadcast signal at step 4d. If it is determined that the audio signal is contained in the received broadcast signal at step 4d, the baseband modem 240 controls the display 140 to output a prescribed message indicative of an audio transmission enable status at step 4e. Although the display 140 is designed to visually indicate the audio transmission enable status, it should be noted that the audio transmission enable status can also be indicated in the form of an audible signal or vibration.

The baseband modem 240 determines whether the user selects a transmission function at step 4f after recognizing the audio transmission enable status. If it is determined that the user selects the transmission function at step 4f, the baseband modem 240 performs an audio processing routine at step 4g. The audio signal having been processed at step 4g is transmitted to the called party at step 4h. In the case of transmitting the broadcast audio signal at step 4h, the broadcast audio signal may be transmitted over an audio channel after being synthesized with a user's voice signal. Otherwise, the broadcast audio signal may only be transmitted over the audio channel after the user's voice signal has been muted. The broadcast audio signal may also be transmitted via a dedicated data channel, differently from the user's voice signal transmitted over the audio channel.

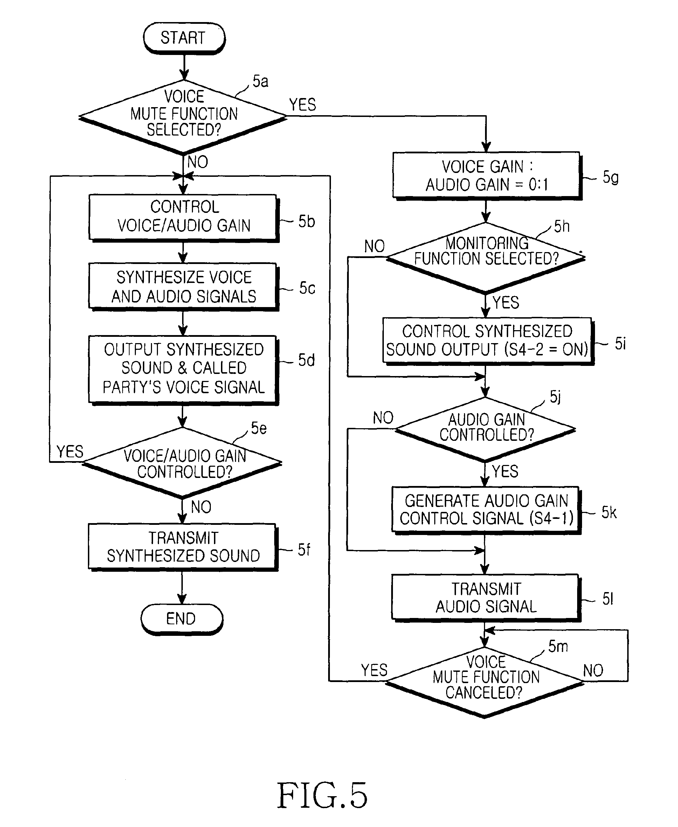

Fig. 5 is a flow chart illustrating detailed operations of the audio processing routine shown in Fig. 4 in accordance with an embodiment of the present invention. The audio processing routine will hereinafter be described with reference to Figs. 1 and 5.

The baseband modem 240 determines whether the user selects a voice mute function at step 5a. If it is determined that the user does not select the voice mute function at step 5a, the baseband modem 240 performs steps 5b to 5f to synthesize the user's voice signal and an audio signal, and transmit the synthesized result over the audio channel. Specifically, if the baseband modem 240 generates a control signal S4 as shown in Fig. 1, the gain control and synthesizer 320 controls individual gains of the voice signal and the audio signal at step 5b, and synthesizes the voice and audio signals at step 5c. The baseband modem 240 controls the synthesizer 280 to synthesize the synthesized result of the voice and audio signals and the called party's voice signal, and the speaker 1801 outputs the synthesized result, such that the user can monitor the magnitude of the synthesized signal where the user's voice signal, the called party's voice signal and the audio signal are all synthesized, or can properly control the sound volume of the synthesized signal.

The baseband modem 240 determines whether the user enters an audio/voice gain control command at step 5e. If it is determined that the user enters the audio/voice gain control command at step 5e, the baseband modem 240 returns to the above step 5b. Otherwise, if it is determined that the user does not enter the audio/voice gain control command at step 5e, the baseband modem 240 controls the RF unit 220 to transmit the synthesized sound of the user's voice signal and the audio signal to the called party over the audio channel.

If it is determined that the user selects the voice mute function at step 5a, the baseband modem 240 performs steps 5g to 5m, such that it blocks the voice signal, and at the same time transmits only the audio signal detected from the received broadcast signal over the audio channel. Specifically, the baseband modem 240 generates the control signal S4-1, and controls the gain control and synthesizer 320 to set the ratio of a voice signal gain to an audio signal gain to a predetermined ratio of "0" to "1" at step 5g. The baseband modem 240 determines whether the user selects a monitoring function at step 5h. If it is determined that the user selects the monitoring function, the baseband modem 240 generates the control signal S4-2 of the first status (i.e., ON status) at step 5i, such that the audio signal detected from the broadcast signal is synthesized with the called party's voice signal and the synthesized result is audibly emitted from the speaker 1801.

In this case, the user's voice signal has no gain (i.e., a gain of "0"), such that it is not generated from the gain control and synthesizer 320. After performing the step 5i, or if the user does not select the monitoring function at step 5h, the baseband modem 240 goes to step 5j. Therefore, the baseband modem 240 determines whether the user enters a predetermined audio gain control command at step 5j. Upon receiving the audio gain control command from the user, the baseband modem 240 generates a corresponding control signal S4-1 at step 5k, such that the gain control and synthesizer 32 controls the signal gain. If the user does not enter the audio gain control command at step 5j after performing the step 5k, the baseband modem controls the RF unit 220 to transmit only the audio signal to the called party over the audio channel at step 51. The baseband modem 240 determines whether the user cancels the voice mute function at step 5m. If it is determined that the voice mute function is canceled at step 5m, the baseband modem 240 returns to the step 5b. Otherwise, if the user does not cancel the voice mute function at step 5m, the baseband modem 240 repeatedly performs the above step 5m.

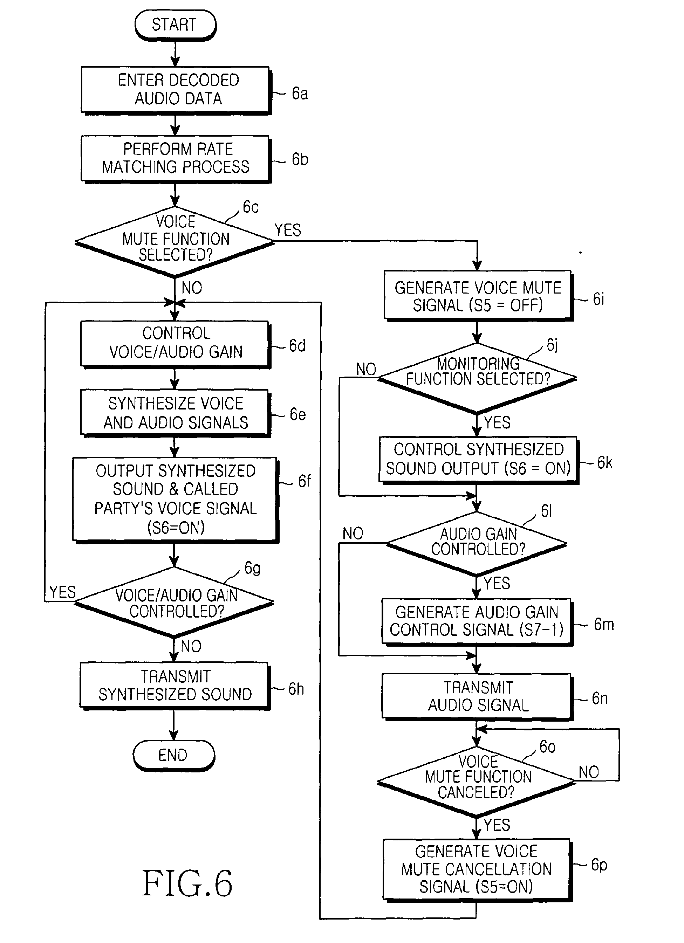

Fig. 6 is a flow chart illustrating another detailed operation of the audio processing routine shown in Fig. 4 in accordance with an embodiment of the present invention. The audio processing routine will hereinafter be described with reference to Figs. 2 and 6.

The baseband modem 240 determines whether decoded audio data is entered at step 6a, and performs a rate matching process at step 6b.

The baseband modem 240 determines whether the user selects a voice mute function at step 6c. If it is determined that the user does not select the voice mute function at step 5c, the baseband modem 240 performs steps 6d to 6h such that it synthesizes a voice signal and an audio signal, and transmits the synthesized result over the audio channel. Specifically, if the baseband modem 240 generates control signals S7-1 and S7-2 at step 6d, the first and second variable gain controllers 480 and 470 control individual gains of the audio signal and the voice signal, respectively. In this case, each gain value of the gain-controlled audio and voice signals may be equal to a predetermined value stored prior to the most recent power-supply OFF time. The baseband modem 240 receives the synthesized signal of the gain-controlled voice and audio signals from the first synthesizer 420 at step 6e. The baseband modem 240 generates a control signal S6 of the first status (i.e., ON status) at step 6f, such that the synthesized sound and the called party's voice signal are audibly emitted from the speaker 1801. The baseband modem 240 determines whether the user enters a voice/audio gain control command at step 6g. If it is determined that the user enters the voice/audio gain control command at step 6g, the baseband modem 240 returns to step 6d, such that the user can monitor the magnitude of the synthesized signal where the user's voice signal, the called party's voice signal, and the audio signal are all synthesized, and can properly control the sound volume of the synthesized signal. Otherwise, if it is determined that the user does not enter the audio/voice gain control command at step 6g, the baseband modem 240 controls the RF unit 220 to transmit the synthesized sound signal of the voice and audio signals to the called party over the audio channel.

If it is determined that the user selects the voice mute function at step 6c, the baseband modem 240 performs steps 6i to 6p, such that it blocks the voice signal, and at the same time transmits only the audio signal detected from the received broadcast signal over the audio channel. Specifically, the baseband modem 240 generates the control signal S5 of the second status (i.e., OFF status) at step 6i, such that it blocks a transmission path of the voice signal transferred from the microphone 300 to the ADC-DAC 260. The baseband modem 240 determines whether the user selects the monitoring function at step 6j. If it is determined that the user selects the monitoring function at step 6j, the baseband modem 240 generates a control signal S6 for interconnecting signal transmission paths at step 6k such that the synthesized signal of the audio signal detected from the broadcast signal and the called party's voice signal is audibly emitted from the speaker 1801. After performing the step 6k, or if the user does not select the monitoring function at step 6j, the baseband modem 240 goes to step 61. Therefore, the baseband modem 240 determines whether the user enters a predetermined audio gain control command at step 61. Upon receiving the audio gain control command from the user, the baseband modem 240 generates a corresponding control signal S7-1 to control the signal gain at step 6m. After performing the step 6m, or if the user does not select the audio gain control command at step 61, the baseband modem 240 goes to step 6n, such that the baseband modem 240 controls the RF unit 220 to transmit only the audio signal to the called party over the audio channel. The baseband modem 240 determines whether the user cancels the voice mute function at step 6o. If it is determined that the voice mute function is canceled at step 6o, the baseband modem 240 generates a control signal S5 of the first status (i.e., ON status) at step 6p to recover a path to transmit the voice signal from the microphone 300 to the ADC-DAC 260, and returns to the step 6d. Otherwise, if the user does not cancel the voice mute function at step 6o, the baseband modem 240 repeatedly performs the above step 6o.

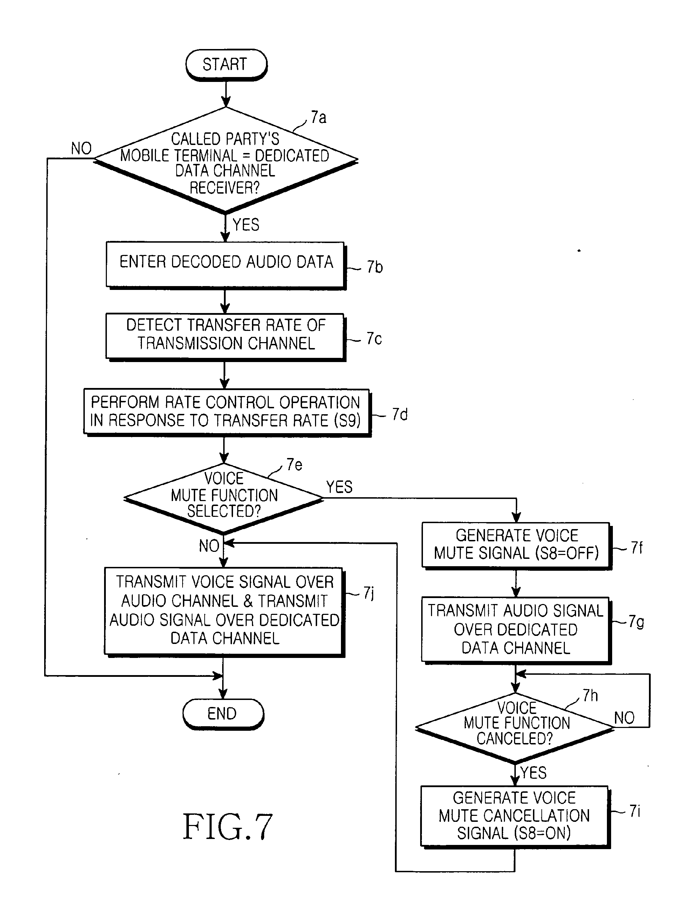

Fig. 7 is a flow chart illustrating yet another detailed operation of the audio processing routine shown in Fig. 4 in accordance with an embodiment of the present invention. The detailed operations of the audio processing routine will hereinafter be described with reference to Figs. 3 and 7.

Referring to Fig. 7, the baseband modem 240 determines whether the called party's mobile terminal is a prescribed mobile terminal serving as a dedicated data channel receiver at step 7a. Specifically, the baseband modem 240 determines whether the called party's mobile terminal can receive a dedicated data channel signal on the basis of exchange information created when forming an initial call path. Therefore, original audio data generated from the decoder according to either a transfer rate of the dedicated data channel or the called party's terminal can be transmitted over the data transmission channel (SCH) separately from the audio channel (FCH). The inventive audio data coding function for data transmission can be implemented in various ways. Although the decoder 58 of Fig. 3 transmits the audio data to the rate matching unit 460 without decoding the audio data in the decoder 58, or transmits the decoded audio signal to the rate matching unit 460, the rate matching unit 460 or the baseband modem 240 may encode the received audio data.

If it is determined that the called party's terminal is a prescribed mobile terminal serving as a dedicated data channel receiver at step 7a, the baseband modem 240 detects the entry of the decoded audio data at step 7b, recognizes a transfer rate of a transmission channel (i.e., a dedicated data channel) at step 7c, and transmits a control signal S9 to the rate matching unit 460 such that the rate matching unit 460 controls the signal gain according to the transfer rate.

The baseband modem 240 determines whether the user selects the voice mute function at step 7e. If it is determined that the user does not select the voice mute function at step 7e, the baseband modem 240 controls the RF unit 220 at step 7j, such that the RF unit 220 transmits the voice signal over the audio channel, and at the same time transmits the audio signal over the dedicated data channel at step 7j.

If the user selects the voice mute function at step 7e, the baseband modem 240 can perform steps 7f to 7h. Specifically, the baseband modem 240 generates a control signal S8 of the second status (i.e., OFF status) to control the voice mute function at step 7f, and thereby controls the ADC-DAC 260 not to process the user's voice signal. The baseband modem 240 controls the RF unit 220 to transmit only the audio signal over the dedicated data channel at step 7g. The baseband modem 240 determines whether the user cancels the voice mute function at step 7h. If it is determined that the user cancels the voice mute function at step 7h, the baseband modem 240 generates the control signal S8 of the first status (i.e., ON status) at step 7i, and returns to the step 7j. Otherwise, if it is determined that the user does not cancel the voice mute function at step 7h, the baseband modem 240 repeatedly performs the above step 7h.

In the case where the user selects the monitoring function, the audio processing routines shown in Figs. 5 and 6 enable the user to listen to the called party's voice signal, such that the user can feel that the transmission audio signal is adapted as a background music signal. However, the audio processing routine shown in Fig. 7 transmits the audio signal over a separate dedicated data channel, such that the user cannot listen to the called party's voice signal using the audio processing routine of Fig. 7. That is, the user cannot use the background music function during his or her phone call time.

As apparent from the above description, in the case of establishing a call connection state between the user and the called party, the embodiment of the present invention enables the user to view and listen to any drama series received over a video channel along with the conversation of the called party. Even in the case of transferring music to the user over the audio channel, the embodiment of the present invention enables the user to listen to the music along with the called party, or enables the user to adapt the music as background sound or waiting sound. In this manner, the embodiment of the present invention transmits the broadcast audio signal along with the voice signal or transmits only the broadcast audio signal separately from the voice signal, resulting in an increased application and usage range (also called a value added range) of the mobile terminal. In addition, the embodiment of the present invention increases the amount of usage time of the mobile terminal associated with viewing TV from the viewpoint of an enterprise or information provider enabling the enterprise or information provider to acquire additional financial profits from their subscribers or users.

The present invention may further contain a separate controller for generating a plurality of signals S4-1, S4-2, S5, S6, S7-1, S7-2, and S8, or may include the separate controller in the DMB reception module 54, the decoder 58, or the baseband modem 240. However, it is most preferable that the signal S9 is generated from the baseband modem 240. Although the DMB reception module 54, the baseband modem 240, and the ADC-DAC 260 are separately shown in the drawings of the present invention, they can also be integrated in a single chip if needed.

Although the embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An apparatus for transmitting an audio signal in a mobile communication terminal serving as a digital multimedia broadcast receiver, the apparatus comprising:
a broadcast reception process part for receiving a digital multimedia broadcast signal having at least an audio signal, separating the audio signal from the received digital multimedia broadcast signal, and outputting the separated audio signal;
a Digital-to-Analog Converter (DAC) for converting the separated audio signal into an analog audio signal;
a controller for determining whether a predetermined request for transmitting the audio signal contained in the digital multimedia broadcast signal is entered during a voice call time;
a first synthesizer for receiving a control signal from the controller, and synthesizing the analog audio signal received from the DAC and a user's voice signal to create a primary synthesized signal; and
a communication part for wirelessly transmitting the primary synthesized signal.

2. The apparatus as set forth in claim 1, wherein the first synthesizer controls a gain of the user's voice signal received via a microphone and a gain of the analog audio signal received from the DAC, and synthesizes the user's voice signal and the analog audio signal.

3. The apparatus as set forth in claim 2, wherein the first synthesizer controls individual input or amplification rates of the user's voice signal and the analog audio signal according to a user's selection command in order to control individual gains of the user's voice signal and the analog audio signal.

4. The apparatus as set forth in claim 1, further comprising:
a second synthesizer for synthesizing a called party's voice signal received via the communication part and the primary synthesized signal (i.e., the audio signal and/or the user's voice signal) generated from the primary synthesizer to create a secondary synthesized signal, and audibly outputting the secondary synthesized signal in the form of audible monitoring sound via a speaker.

5. The apparatus as set forth in claim 1, wherein the first synthesizer generates a control signal not to process the user's voice signal when the user selects a voice mute function.

6. The apparatus as set forth in claim 5, wherein the control signal for controlling the first synthesizer not to process the user's voice signal is generated from a baseband modem contained in the communication part.

7. The apparatus as set forth in claim 5, further comprising:
a signal transmission controller for transmitting or not transmitting the user's voice signal to the first synthesizer in response to the control signal for preventing the user's voice signal from being processed.

8. The apparatus as set forth in claim 1, further comprising:
a display for indicating a transmission enable status of the broadcast audio signal if the broadcast reception process part determines that the audio signal is contained in the digital multimedia broadcast signal.

9. An apparatus for transmitting an audio signal in a mobile communication terminal serving as a digital multimedia broadcast receiver, the apparatus comprising:
a broadcast reception process part for receiving a digital multimedia broadcast signal having at least an audio signal, separating the audio signal from the received digital multimedia broadcast signal, and outputting the separated audio signal;
a rate matching unit for controlling a ratio of a user's voice signal to the separated audio signal;
a first synthesizer for synthesizing the audio signal generated from the rate matching unit and the user's voice signal to create a synthesized signal; and
a communication part for wirelessly transmitting the synthesized signal.

10. The apparatus as set forth in claim 9, further comprising:
a first variable gain controller for controlling a gain of the ratio-controlled audio signal, and transmitting the gain-controlled audio signal to the first synthesizer; and
a second variable gain controller for controlling a gain of the user's voice signal configured in the form of digital data, and transmitting the gain-controlled voice signal to the first synthesizer.

11. The apparatus as set forth in claim 10, further comprising:
a first signal transmission controller for transmitting or not transmitting the user's voice signal received via a microphone to the communication part; and
a controller for controlling the first signal transmission controller not to transmit the user's voice signal to the communication part upon receiving a voice mute function command from the user.

12. The apparatus as set forth in claim 10, further comprising:
a second synthesizer for synthesizing the synthesized signal generated from the first synthesizer and a wirelessly-received called party's voice signal, transmitting their synthesized result to a speaker of the communication part, and thereby enabling the speaker to audibly output the received synthesized result;
a second signal transmission controller for transmitting or not transmitting the output signal of the first synthesizer to the second synthesizer; and
a controller for controlling the second signal transmission controller to transmit the output signal of the first synthesizer to the second synthesizer upon receiving a monitoring function command from the user.

13. The apparatus as set forth in claim 11, wherein the controller includes a baseband modem contained in the communication part.

14. The apparatus as set forth in claim 12, wherein the controller includes a baseband modem contained in the communication part

15. The apparatus as set forth in claim 11, wherein the controller is a digital multimedia broadcast reception module contained in the broadcast reception process part.

16. The apparatus as set forth in claim 12, wherein the controller includes a digital multimedia broadcast reception module contained in the broadcast reception process part.

17. The apparatus as set forth in claim 11, wherein the controller includes a decoder contained in the broadcast reception process part.

18. The apparatus as set forth in claim 12, wherein the controller includes a decoder contained in the broadcast reception process part.

19. The apparatus as set forth in claim 9, further comprising:
a display for indicating a transmission enable status of the broadcast audio signal if the broadcast reception process part determines that the audio signal is contained in the digital multimedia broadcast signal.

20. An apparatus for transmitting an audio signal in a mobile communication terminal serving as a digital multimedia broadcast receiver, comprising:
a broadcast reception process part for receiving a digital multimedia broadcast signal having at least an audio signal, separating the audio signal from the received digital multimedia broadcast signal, and outputting the separated audio signal;
a rate matching unit for performing a rate control operation to transmit the separated audio signal over a dedicated data transmission channel; and
a communication part for controlling the rate matching unit to vary its own control rate according to wireless environments, and transmitting the audio signal over the dedicated data transmission channel.

21. The apparatus as set forth in claim 20, further comprising:
a display for indicating a transmission enable status of the broadcast audio signal; and
a controller contained in the communication part, for controlling the display to indicate a predetermined status if the digital multimedia broadcast signal received in the broadcast reception process part contains the audio signal, upon receiving a specific signal indicative of the predetermined status.

22. The apparatus as set forth in claim 20, wherein the communication part generates a rate control signal according to a data transfer rate, and thereby controls the rate matching unit.

23. The apparatus as set forth in claim 21, wherein the controller includes a baseband modem for digital communication.

24. The apparatus as set forth in claim 22, wherein the controller includes a baseband modem for digital communication.

25. The apparatus as set forth in claim 20, wherein the communication part includes an Analog-to-Digital Converter - Digital-to-Analog Converter (ADC-DAC),
wherein the ADC-DAC does not process the user's voice signal in response to a predetermined control signal, and performs a voice mute function.

26. The apparatus as set forth in claim 25, wherein the ADC-DAC generates a control signal not to process the user's voice signal when the user selects the voice mute function.

27. The apparatus as set forth in claim 26, wherein the control signal is generated from a baseband modem contained in the communication part.

28. The apparatus as set forth in claim 26, wherein the control signal is generated from a digital multimedia broadcast reception module contained in the broadcast reception process part.

29. The apparatus as set forth in claim 26, wherein the control signal is generated from a decoder included in the broadcast reception process part.

30. The apparatus as set forth in claim 25, further comprising:
a controller for generating a control signal for controlling the ADC-DAC not to process the user's voice signal when the user selects the voice mute function.

31. A method for transmitting an audio signal in a mobile communication terminal serving as a digital multimedia broadcast receiver, comprising the steps of:
a) determining whether a broadcast signal is received while performing a voice call function;
b) determining whether the received broadcast signal contains an audio signal; and
c) if the received broadcast signal contains the audio signal, detecting the audio signal, and transmitting it over an audio channel.

32. The method as set forth in claim 31, wherein the step (c) includes the step of:
c1) synthesizing the audio signal detected from the received broadcast signal and a voice signal, and transmitting the synthesized result.

33. The method as set forth in claim 32, further comprising the steps of:
d) determining whether a user selects a voice monitoring function; and
e) if the user selects the voice monitoring function, generating a control signal for interconnecting signal transmission paths to audibly output the synthesized signal of the audio signal detected from the broadcast signal and the voice signal via a speaker.

34. The method as set forth in claim 32, further comprising the steps of:
f) determining whether the user selects the voice monitoring function; and
g) if the user selects the voice monitoring function, generating a control signal for interconnecting signal transmission paths to audibly output the synthesized signal of three signals, i.e., the audio signal detected from the broadcast signal, the user's voice signal, and a called party's voice signal via a speaker.

35. The method as set forth in claim 31, further comprising the steps of:
h) determining whether the user selects a voice mute function; and
i) if the user selects the voice mute function, blocking the voice signal at step (c), and transmitting the audio signal detected from among the received broadcast signal over the audio channel.

36. The method as set forth in claim 31, further comprising the step of:
j) if the received broadcast signal contains the audio signal, informing a user of a transmission enable status of the broadcast audio signal.

37. The method as set forth in claim 36, further comprising the step of:
k) after performing step (j), determining whether the user selects a transmission function, and determining whether step (c) is to be executed or not according to the determination result.

38. The method as set forth in one of claim 32, further comprising the step of:
l) controlling an amplification gain of the audio signal according to a selection command of the user.

39. The method as set forth in one of claim 33, further comprising the step of:
l) controlling an amplification gain of the audio signal according to a selection command of the user.

40. The method as set forth in one of claim 34, further comprising the step of:
l) controlling an amplification gain of the audio signal according to a selection command of the user.

41. The method as set forth in claim 38, further comprising the step of:
m) controlling an amplification gain of the voice signal according to a selection command of the user.

42. A method for transmitting an audio signal in a mobile communication terminal serving as a digital multimedia broadcast receiver, comprising the steps of:
a) determining whether a broadcast signal is received while performing a voice call function;
b) determining whether the received broadcast signal contains an audio signal; and
c) if the received broadcast signal contains the audio signal, detecting the audio signal, and transmitting it over a dedicated data channel.

43. The method as set forth in claim 42, further comprising the steps of:
d) determining whether a user selects a voice mute function; and
e) if the user selects the voice mute function at step (d) while transmitting the audio signal over the dedicated data channel at step (c) simultaneously with transmitting a voice signal over an audio channel, stopping transmission of the voice signal over the audio channel.

44. The method as set forth in claim 42, further comprising the step of:
f) if the received broadcast signal contains the audio signal, informing a user of a transmission enable status of the broadcast audio signal.

45. The method as set forth in claim 44, further comprising the step of:
g) determining whether the user selects a transmission function, and determining whether step (c) is to be executed or not according to the determination result.

46. The method as set forth in claim 42, further comprising the step of:
h) controlling an amplification gain of the audio signal according to a transfer rate of the dedicated data channel.
